# EUROPÄISCHE PATENTSCHRIFT

(11) **EP 4 474 677 B1**
(45) Veröffentlichungstag und Bekanntmachung des Hinweises auf die Patenterteilung: **13.05.2026**
(21) Anmeldenummer: 23177333.4
(22) Anmeldetag: 05.06.2023
(51) Int. Cl.: F16H 9/04

(54) **GETRIEBEEINRICHTUNG UND LANDWIRTSCHAFTLICHE MASCHINE MIT EINER SOLCHEN**
TRANSMISSION DEVICE AND AGRICULTURAL MACHINE WITH SUCH A TRANSMISSION DEVICE
DISPOSITIF DE TRANSMISSION ET MACHINE AGRICOLE DOTÉE D'UN TEL DISPOSITIF

(43) Veröffentlichungstag der Anmeldung: 11.12.2024
(73) Patentinhaber: Deere & Company, Moline, IL 61265 (US)
(72) Erfinder: ROHLFING, Thomas, 68163 Mannheim (DE); JUNDALE, Prashant M, 68163 Mannheim (DE); PEREZ, Javier Jose, 68163 Mannheim (DE)
(74) Vertreter: Reichert, Christian

(56) Entgegenhaltungen:
- EP-A1- 0 195 706
- CN-U- 207 437 710
- DE-B- 1 031 601
- GB-A- 1 344 115

## Beschreibung

Die Erfindung betrifft eine Getriebeeinrichtung mit einem ersten Antriebselement, einem zweiten Antriebselement, einer als Hohlwelle ausgebildeten Schaltmuffe und einer Abtriebswelle. Die Schaltmuffe ist auf der Abtriebswelle axial verschiebbar gelagert und kann durch axiales Verschieben in eine erste, zweite oder dritte Schaltstellung verbracht werden. Am ersten und am zweiten Antriebselement ist jeweils eine Innenverzahnung, an der Schaltmuffe eine Außenverzahnung und eine Innenverzahnung und an der Abtriebswelle eine Außenverzahnung ausgebildet. In der ersten Schaltstellung bildet die Außenverzahnung der Schaltmuffe eine erste Verzahnungspaarung mit der Innenverzahnung des ersten Antriebselements. In der zweiten Schaltstellung bildet die Außenverzahnung der Schaltmuffe eine zweite Verzahnungspaarung mit der Innenverzahnung des zweiten Antriebselements. Ferner bildet die Innenverzahnung der Schaltmuffe mit der Außenverzahnung der Abtriebswelle eine dritte Verzahnungspaarung.

Getriebeeinrichtungen sowie Antriebsvorrichtungen mit Getrieben für antreibbare Bearbeitungseinrichtungen an Erntemaschinen sind bekannt und werden in verschiedener Form vielseitig eingesetzt. So offenbart beispielsweise die DE 2 745 564 C2 eine Antriebsvorrichtung für eine Bearbeitungseinrichtungen eines Mähdreschers, mit einem Riemenantrieb und einer Riemenscheibe, die auf einer zu einer Hauptantriebswelle konzentrischen Hohlwelle angeordnet ist. Auf der Hohlwelle ist ein Antriebszahnrad angeordnet und ein Schaltelement vorgesehen, welches in zwei Stellungen axial verschiebbar ist und die Hauptantriebswelle wahlweise mit jeweils einem mit dem Antriebszahnrad in Verbindung stehenden Zahnrad unterschiedlicher Drehrichtung verbindet, wobei das Schaltelement in einer ersten Stellung ein Sonnenrad eines Planetengetriebes über Planetenräder und ein zweites Sonnenrad mit der Hauptantriebswelle verbindet und in einer zweiten Stellung das Sonnenrad des Planetengetriebes über Planetenräder und einen Zahnkranzträger mit der Hauptantriebswelle in Verbindung bringt.

Die DE 2 744 344 C3 offenbart ebenfalls eine Antriebsvorrichtung für Erntemaschinen mit einem Riemenantrieb, welcher eine auf einer Abtriebswelle drehbar gelagerte Abtriebsscheibe aufweist. Der Riemenantrieb ist direkt oder über ein wahlweise zuschaltbares Reduziergetriebe indirekt mit einer Abtriebswelle in Antriebsverbindung bringbar, beispielsweise mit einer Abtriebswelle für eine Dreschtrommel.

Aus dem Stand der Technik sind auch weitere Getriebeeinrichtungen in Verbindung mit Riemenantrieben bekannt, die in landwirtschaftlichen Maschinen, insbesondere Erntemaschinen mit Bearbeitungseinrichtungen für aufgenommenes Erntegut, Anwendung finden. Dazu gehören beispielsweise Mähdrescher, Feldhäcksler oder auch Zuckerrohrernter oder auch andere Erntemaschinen, die eine Bearbeitung für aufgenommenes Erntegut in der Maschine vorsehen. So kann im Erntegutfluss beim Ernten des Ernteguts ein Dreschen, Häckseln, Schneiden oder eine andere Art der Bearbeitung vorgesehen sein, wobei für die Bearbeitungseinrichtungen, wie beispielsweise eine Häckseltrommel, verschiedene Antriebsstufen und damit eine Drehzahlvariation vorgesehen sind. Eine solche Getriebeeinrichtung wird in DE 102019213717 A1 offenbart. Die Getriebeeinrichtung umfasst eine Schalteinrichtung mit einer Getriebewelle und ein darauf gelagertes Schaltzahnrad, wobei das Schaltzahnrad mit einer axial zur Getriebewelle verschiebbaren Schaltmuffe ausgebildet ist. Die Schaltmuffe weist eine Innenverzahnung auf, die mit einer Außenverzahnung der Getriebewelle in Eingriff steht, so dass das die Schaltmuffe zusammen mit dem Schaltzahnrad auf der Getriebewelle axial verschiebbar mit dieser in Antriebsverbindung steht. Die Schaltmuffe mit dem Schaltzahnrad ist in mehrere Schaltstellungen axial verschiebbar, so dass zwei Antriebsstufen, in denen das Schaltzahnrad mit jeweils unterschiedlichen Antriebsrädern eines Planetengetriebes verbunden wird, und eine Leerlaufstellung einstellbar sind.

Bei den oben genannten Getriebeeinrichtungen sind antriebsseitig nur eine Riemenscheibe vorgesehen, wobei bei einer wie im zuletzt genannten Dokument nicht variablen Riemenscheibe eine Übersetzungseinrichtung in Form eines Planetengetriebes vorgesehen ist, die über das Schaltzahnrad bedient wird, um unterschiedliche Abtriebsdrehzahlen zu erhalten. Die Übersetzungs- und Schalteinrichtung sind somit komplex gestaltet und nehmen zusätzlichen Bauraum ein. Zudem sind sie kostenaufwändig.

Um die genannten aufwändigen und komplexen Übersetzungseinrichtungen zu vermeiden, werden in Verbindung mit Riemenantrieben auch Getriebeeinrichtungen angeboten, die antriebsseitig zwei Riemenscheiben aufweisen und unterschiedliche Drehzahlen bzw. unterschiedliche Übersetzungen durch Zu- und Abschalten der jeweiligen Riemenscheiben erzielt werden. Derartige Getriebeeinrichtungen mit zwei Riemenscheiben finden beispielsweise in Riemenantrieben von Mähdrescher mit Häckseleinrichtungen oder anderen Einrichtungen zur Bearbeitung von Erntegut (beispielsweise Dreschen oder Schneiden) Verwendung. Auch für den Antrieb von Gebläseeinrichtungen in Erntemschinen können die genannten Riemenantriebe mit zwei Riemenscheiben Anwendung finden. Die oben erwähnten Häckseleinrichtungen umfassen Häckseltrommeln, die über einen solchen Riemenantrieb angetrieben sind. Die unterschiedlichen Drehzahlen dienen beispielsweise der Anpassung der Häckseleinrichtung an das Erntegut sowie auch den Anforderungen des Betreibers zur Variation beispielsweise der Häcksellänge des Ernteguts. Ferner sind seitens des Betreibers auch Drescharbeiten ohne nachgeschaltetem Häckselbetrieb wünschenswert. Die zum Antrieb der Häckseleinrichtungen vorgesehenen Riemenantriebe werden üblicherweise durch eine mit dem Antriebsmotor der Erntemaschine in Verbindung stehende Riemenscheibe abgezweigt. Somit steht die Häckseleinrichtung in der Regel direkt mit der Drehzahl des Antriebsmotors in Verbindung, was dazu führt, dass auch die Komponenten an der Häckseleinrichtung, wie Dichtungen, Lager, Schmierung direkt von der Drehzahl des Antriebsmotors beeinflusst werden. Die genannten Komponenten sind in Häckseleinrichtungen in der Regel auf einen maximalen Drehzahlbereich ausgelegt, der bei hohen Drehzahlen des Antriebsmotors überschritten werden könnte. Bei zu hohen Drehzahlen würden die genannten Komponenten den damit verbundenen hohen Temperaturen ausgesetzt werden und es könnten Schäden und verfrühte Verschleißerscheinungen auftreten, insbesondere bei den Dichtungen. Um dies zu vermeiden ist es wünschenswert bei zu hohen Drehzahlen des Antriebsmotors die Antriebsübersetzung der Häckseleinrichtung anzupassen bzw. eine sich einstellende, zu hohe Drehzahl der Häckseleinrichtung zu reduzieren, so dass zu hohe Drehzahlen für die genannten Komponenten vermieden werden können. Auch ist es ratsam eine Vorrichtung zu schaffen, durch die eine Häckseleinrichtung wahlweise vom Antrieb durch den Antriebsmotor entkoppelt werden kann. Ähnliche Anwendung finden Riemenantriebe auch bei anderen Bearbeitungseinrichtungen von Erntemaschinen. So kann im Erntegutfluss beim Ernten des Ernteguts ein Dreschen, Häckseln, Schneiden oder eine andere Art der Bearbeitung vorgesehen sein, wobei für die Bearbeitungseinrichtungen, wie beispielsweise eine Häckseltrommel, verschiedene Antriebsstufen und damit eine Drehzahlvariation vorgesehen sind. Letztendlich finden die oben genannten Getriebeeinrichtungen in vielerlei Arten von Erntemaschinen mit Riemenantrieben für verschiedenste Bearbeitungseinrichtungen Anwendung, beispielsweise neben Mähdreschern auch in Feldhäckslern, Zuckerrohrerntern und Ballenpressen.

Neben den bereits geschilderten Nachteilen, die eine aufwändige Übersetzungseinrichtung mit Planetengetriebe gemäß DE 102019213717 A1 mit sich bringt, stellt sich dort auch nachteilig dar, dass das zur Schalteinrichtung gehörende Schaltzahnrad aus der Leerlaufstellung heraus in die Schaltstellung eingerückt, und vor dem Einrücken relativ präzise mittels der axial verschiebbaren Schaltmuffe zu dem jeweiligen Antriebszahnrad des Planetengetriebes ausgerichtet werden muss. Dies ist der Fall, wenn die Zähne des Schaltzahnrades nicht mit den Zahnlücken der Antriebszahnräder fluchten und die jeweiligen Zahnstirnflächen gegeneinanderstoßen, so dass in Leerlaufstellung erst ein manuelles Ausrichten bzw. Verdrehen der Schaltmuffe oder des jeweiligen Antriebszahnrad erfolgen muss. Erst dann wird aus der Leerlaufstellung heraus das Einrücken des Schaltrades und das Ineinandergreifen mit den Zähnen des jeweiligen Antriebszahnrads ermöglicht. Aufgrund eines normierten, relativ geringen radialen Verzahnungsspiels zwischen den Zähnen muss die Einrückposition der Schaltmuffe bzw. des Schaltrades sehr präzise erfolgen. Dies erweist sich oft als relative schwierig, da sowohl die Schaltmuffe als auch die Antriebsräder mit anderen Antriebs- bzw. Abtriebskomponenten verbunden ist und ein manuelles Verdrehen der Schaltmuffe oder des entsprechenden Antriebselements einen relativ hohen Kraftaufwand erfordert. Der Schaltvorgang bzw. das präzise manuelle Ausrichten oder Verdrehen der Schaltmuffe gestaltet sich dadurch oftmals problematisch und zeitaufwändig.

Die Konstruktion und Fertigung von Verzahnungen basiert auf Zahnradnormen, wie beispielsweise der DIN 780. Gemäß der DIN 780 ergibt sich ein normierter Zahnradmodul als Maß für die Größe der Zähne von Zahnrädern, wobei sich der normierte Zahnradmodul m aus dem Teilkreisdurchmesser d des Zahnrads geteilt durch die Zähnezahl z des Zahnrads, zu m=d/z ergibt. Um die Auswahl zueinander passender Zahnräder zu vereinfachen und um standardisierte Werkzeuge verwenden zu können, sind in der DIN 780 Vorzugsreihen definiert, in welchen eine für einen normierten Zahnmodul m zugehörige Zahnteilung pₘ angegeben ist, wobei die Zahnteilung pₘ als Verhältnis des Zahnradumfangs U am Teilkreis (mit Teilkreisdurchmesser d) zur Zähnezahl z definiert ist, also pₘ=U/z. Mit der Kreiszahl π=U/d bzw. durch U=π_{*}d ergibt sich, dass die Zahnteilung pₘ durch pₘ=π_{*}d/z oder pₘ=π_{*}m definiert ist. Die Zahnteilung pₘ ist damit auch definiert als die Bogenlänge auf dem Teilkreis (mit Teilkreisdurchmesser d) zwischen zwei gleichen auf dem Teilkreis liegenden Punkten von zwei benachbarten Zähnen eines Zahnrads mit normiertem Zahnmodul m.

Die der Erfindung zugrunde liegende Aufgabe wird darin gesehen, eine Getriebeeinrichtung der eingangsgenannten Art anzugeben, mit der Schaltvorgänge vereinfacht ausführbar sind.

Die Aufgabe wird erfindungsgemäß durch die Lehre der Patentansprüche 1 gelöst. Weitere vorteilhafte Ausgestaltungen und Weiterbildungen der Erfindung gehen aus den Unteransprüchen hervor.

Erfindungsgemäß wird eine Getriebeeinrichtung der eingangsgenannten Art derart ausgebildet, dass die erste, zweite und dritte Verzahnungspaarung mit einer gegenüber normierten Zahnradmoduln zugeordneten Zahnteilung pₘ um in etwa den Faktor 2 größeren Zahnteilung p ausgebildet ist, so dass ein um in etwa den Faktor 2 größerer Zahnabstand erzielbar ist. Dabei wird der Zahnabstand als Entfernung zwischen zwei gleichen Punkten zweier benachbarter Zähne auf dem Teilkreis verstanden. Der Zahnabstand beeinflusst damit direkt eine Zahnlückenbreite oder Zahnzwischenraumlänge in Höhe des Teilkreises, jeweils in Umfangsrichtung. Mit einer derartigen Ausbildung der Verzahnungen wird der Zahnabstand in den jeweiligen Verzahnungen gegenüber einer normierten Verzahnung verdoppelt, wobei die Zahngeometrie, also Form und Größe der Zähne entsprechend der den normierten Zahnmoduln zugeordneten Zahngeometrie beibehalten wird. Das Verhältnis von Zahnlückenbreite oder Zahnzwischenraumlänge zu Zahnbreite wird dadurch in Höhe des Teilkreisdurchmessers in etwa verdreifacht (von in etwa 1 (einfache Zahnlücke) auf in etwa 3 (dreifache Zahnlücke)). Für eine Verzahnungspaarung mit geradzahliger Zähnezahl in jeder Verzahnung (Zahnräder mit geradzahliger Zähnezahl) ergibt sich beispielsweise eine erfindungsgemäße Verzahnungspaarung dadurch, dass letztere gegenüber einer normierten Verzahnungspaarung (mit geradzahliger Zähnezahl in jeder Verzahnung) mit nur jedem zweiten Zahn ausgebildet ist. Oder andersherum, eine erfindungsgemäße Verzahnungspaarung wird dadurch erhalten, dass aus der normierten Verzahnungspaarung (mit geradzahliger Zähnezahl in jeder Verzahnung) mit normierten Zahnmoduln nur jeder zweite Zahn ausgebildet ist. Wieder mit anderen Worten, eine erfindungsgemäße Verzahnungspaarung wird dadurch erhalten, dass aus der normierten Verzahnungspaarung mit normierten Zahnmoduln (mit geradzahliger Zähnezahl in jeder Verzahnung) jeder zweite Zahn entfernt wird. Zum Beispiel ergibt sich eine erfindungsgemäße Verzahnungspaarung dadurch, dass eine Verzahnungspaarung aus einer Innenverzahnung und einer Außenverzahnung gemäß normierten Zahnmoduln mit Zahnmodul m, Durchmesser d und einer Zähnezahl von 28, derart abgeändert, wird, dass sich bei gleichem Zahnmodul m und Durchmesser d eine Zähnezahl von 14 ergibt. Damit wird eine zum Einrücken der Zähne zur Verfügung stehende Zahnlücke (Zahnlückenbreiten bzw. Zahnzwischenraumlängen) in etwa verdreifacht, von in etwa einer Zahnbreite (entsprechend der Norm) auf in etwa drei Zahnbreiten. Die in etwa um den Faktor 2 größere Zahnteilung p (im Vergleich zu einer gemäß normierten Zahnmoduls zugeordneten Zahnteilung pₘ) wird auch innenseitig der Schaltmuffe auf die dritte Verzahnungspaarung angewendet, so dass auch dort der Zahnabstand von in etwa einer Zahnbreite auf in etwa drei Zahnbreiten vergrößert wird (jeweils bezogen auf den Teilkreis der Verzahnung). Damit wird ein limitierter Freilauf für die Schaltmuffe in beide Umfangsrichtungen geschaffen, da diese nunmehr in jeder Schaltstellung für ein gewisses Rotationsmaß ohne jeglichen Eingriff der Zähne, weder seitens der Antriebselemente noch seitens der Abtriebswelle verdrehbar ist. Der limitierte Freilauf deckt in etwa eine Kreisbogenlänge des Teilkreises von zwei Zahnbreiten am Teilkreis ab. Mit anderen Worten, das Maß des limitierten Freilaufs über zwei Zahnbreiten stellt sicher, dass jeder mögliche Überdeckungszustand bei einem Schaltvorgang von einer Schaltstellung in eine andere Schaltstellung (also jede mögliche Fehlstellung beim Einrücken) überwunden werden kann. Damit kann die Schaltmuffe mit ihrer Außenverzahnung zum Einrücken in die Zahnlücken der Antriebselemente ohne Einwirkung von Gegenkräften oder Gegenmomenten seitens der Abtriebswelle bzw. seitens eines daran verbundenen Abtriebsstrangs verdreht und ausgerichtet werden. Ein Verdrehen bzw. Ausrichten der Schaltmuffe kann quasi drehmomentfrei erfolgen, wodurch die Schaltvorgänge nahezu ohne Kraftaufwand erfolgen können.

In einer weiteren Ausgestaltung der Erfindung sind an der Schaltmuffe innenseitig Ringnuten ausgebildet und jeder Schaltstellung ist eine Ringnut zugeordnet, die jeweils durch axiales Verschieben der Schaltmuffe auf der Abtriebswelle mit einem in der Abtriebswelle federvorgespannt gelagerten Rastbolzen in Eingriff bringbar ist. Der durch axiales Verschieben der Schaltmuffe in die Ringnuten einbringbare Rastbolzen fixiert die Schaltmuffe in ihren verschiedenen Schaltstellungen. Somit ist für jede Schaltstellung (für die Schaltstellungen, in der die Schaltmuffe in das erste oder zweite Antriebselement vollständig eingerückt ist und für die Schaltstellung in der ein Leerlauf hergestellt wird, also in der die Schaltmuffe in keine der Antriebselemente eingerückt ist) eine auf der radialen Innenseite der Schaltmuffe angeordnete Ringnut vorgesehen. Der in der Abtriebswelle gelagerte Rastbolzen kann bei jeder vorliegenden Schaltstellung durch Federvorspannung in die entsprechende Ringnut einrasten bzw. in diese hineinragen und die Schaltmuffe entsprechend fixieren. Die Federvorspannung des Rastbolzen ist so bemessen, dass dieser relativ einfach durch manuelles axiales Verschieben der Schaltmuffe aus der jeweiligen Ringnut heraus ausgerückt werden kann.

An einem axial, frei liegenden Ende der Schaltmuffe kann ein Betätigungsknauf zum axialen Verstellen und rotatorischen Ausrichten der Schaltmuffe (Verdrehen der Schaltmuffe) ausgebildet sein. Dieser ermöglicht ein bequemes und praktikables Hantieren der Schaltmuffe bei einem Wechsel der Schaltstellung, insbesondere wenn die Schaltmuffe gegenüber der Abtriebswelle axial verschoben und/oder verdreht wird.

In einer weiteren Ausgestaltung der Erfindung ist die Abtriebswelle als Hohlwelle ausgebildet und mit einer Innenverzahnung versehen. Dies ermöglichte einen einfache Antriebsverbindung mit einer außenverzahnten Anschlusswelle, die durch die Getriebeeinrichtung angetrieben werden soll, beispielsweise eine Anschlusswelle für eine Häcksel-, Dresch-, Schneid- oder Gebläseeinrichtung an einer Erntemaschine.

Die Getriebeeinrichtung eignet sich besonders für einen Riemenantrieb, wobei antriebsseitig das erste und das zweite Antriebselement jeweils eine Riemenscheibe umfasst und mit einem Riementrieb verbunden ist. Die Riemenscheiben können mit unterschiedlichen Außendurchmessern versehen sein, um eine Drehzahlvariation bei gleichen Riemengeschwindigkeiten bzw. Riemendrehzahlen zu erzielen. Es ist aber auch möglich mit unterschiedlichen Riemengeschwindigkeiten an den jeweiligen Riemenscheiben eine Drehzahlvariation bereitzustellen.

Die Getriebeeinrichtung eignet sich als Antriebskomponente in einem Riemenantrieb einer Erntemaschine, wie beispielsweise einem Mähdrescher, Feldhäcksler, Mähmaschine, Ballenpresse, Zuckerrohrernter oder einem Baumwollpflücker. Jede dieser Erntemaschinen verfügt über Antriebs- oder Nebenaggregate, die mittels Riemenantriebe angetrieben werden und oftmals je nach Anwendung und Erntebedingungen mit verschiedenen Antriebsdrehzahlbedingungen betrieben werden wollen. Beispielsweise kann es erforderliche sein, bei sehr dichten Erntebeständen die Erntemaschine mit hoher Antriebsdrehzahl zu betreiben jedoch die Drehzahlabhängigkeit des Nebenantriebs oder Nebenaggregats aufgrund einer hohen Antriebsdrehzahl zu reduzieren, um das Nebenaggregat nicht zu überhitzen bzw. zu überlasten.

Anhand der Zeichnungen, die ein Ausführungsbeispiel der Erfindung zeigen (insbesondere Figuren 2 bis 5), werden nachfolgend die Erfindung sowie weitere Vorteile und vorteilhafte Weiterbildungen und Ausgestaltungen der Erfindung näher beschrieben und erläutert.

Es zeigen:
- Fig. 1: eine schematische Seitenansicht einer Erntemaschine mit einem Riemenantrieb
- Fig. 2: eine schematische Querschnittsansicht einer Getriebeeinrichtung für einen Riemenantrieb aus Figur 1, in einer Leerlaufstellung,
- Fig. 3: eine schematische Querschnittsansicht der Getriebeeinrichtung aus Figur 2, in einer ersten Schaltstellung
- Fig. 4: eine schematische Querschnittsansicht einer Getriebeeinrichtung aus Figur 2, in einer zweiten Schaltstellung,
- Fig. 5: eine schematische Querschnittsansicht von Verzahnungspaarungen in der Getriebeeinrichtung aus Figur 2, 3 und 4.

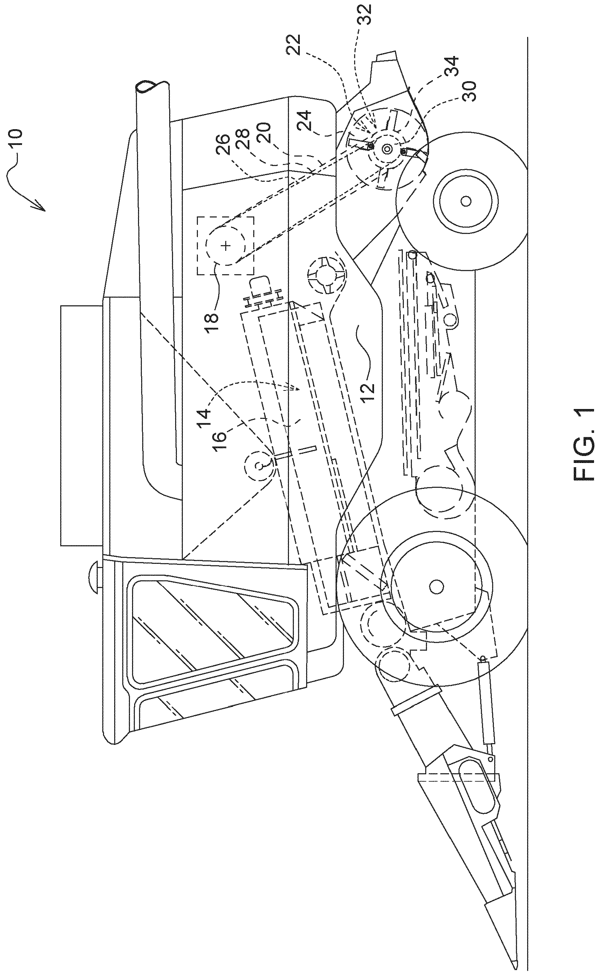

Figur 1 zeigt eine selbstfahrende landwirtschaftliche Maschine 10, die beispielhaft in Form eines Mähdreschers ausgebildet ist. Denkbar ist auch, dass das im Folgenden weiter beschriebene Ausführungsbeispiel auch an einer andersartigen selbstfahrenden landwirtschaftlichen Maschine, beispielsweise einem Feldhäcksler, einer Mähmaschine, einem Zuckerrohrernter oder einer Ballenpresse ausgebildet sein kann.

Die landwirtschaftliche Maschine 10 weist ein Maschinengehäuse 12 und eine erste Bearbeitungseinrichtung 14 in Form einer Drescheinrichtung 16 mit einem in Längsrichtung der landwirtschaftlichen Maschine 10 ausgerichteten Axialrotor auf. Die landwirtschaftliche Maschine 10 wird von einem (nur schematisch dargestellten) Verbrennungsmotor 18 angetrieben. Der Verbrennungsmotor 18 ist ausgangsseitig mit einem Riemenantrieb 20 verbunden durch welchen eine Bearbeitungseinrichtung, hier eine Häckseleinrichtung 22 mit Häckseltrommel 24, angetrieben wird. Der Riemenantrieb 20 umfasst einen ersten und einen zweiten Antriebsriemen 26, 28, wobei der erste Antriebsriemen 26 mit einem eine Riemenscheibe 30 umfassenden ersten Antriebselement 32 einer Getriebeeinrichtung 34 und der zweite Antriebsriemen 28 mit einem eine Riemenscheibe 36 umfassenden zweiten Antriebselement 38 der Getriebeeinrichtung 34 verbunden ist. Die Getriebeeinrichtung 34 dient zum Antreiben der Häckseleinrichtung 22 mit zwei Drehzahlstufen.

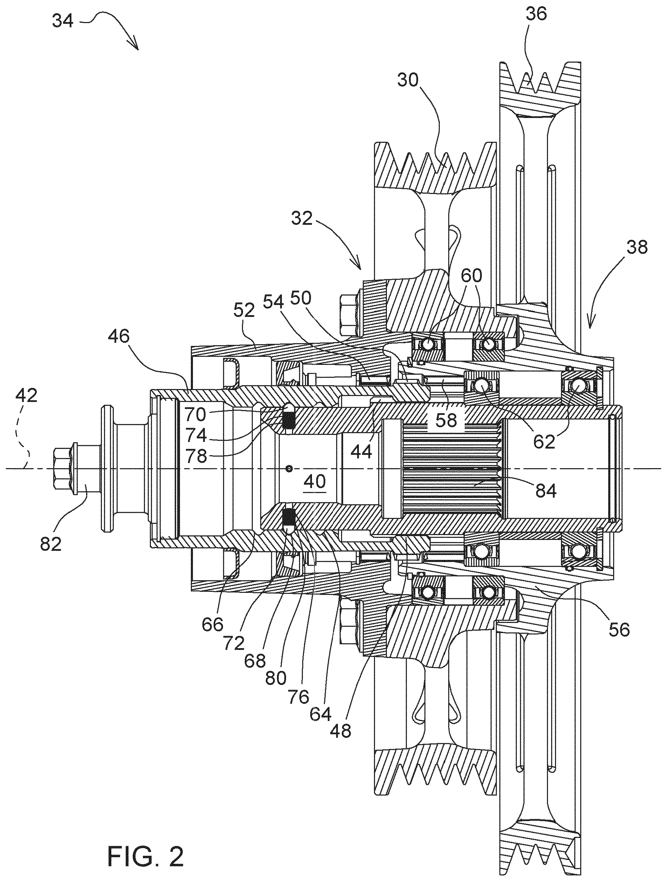

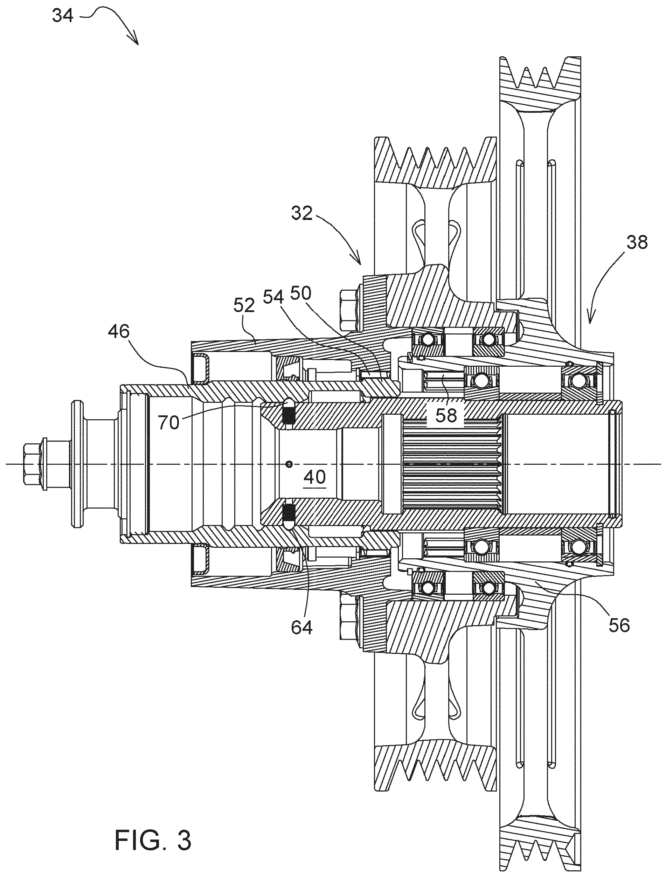

In den Figuren 2 und 3 sind weitere Details der Getriebeeinrichtung 34 dargestellt. Die Getriebeeinrichtung 34 ist in diesem Beispiel als Teil des nicht näher dargestellten Riemenantriebs 20 ausgebildet und umfasst die Riemenscheiben 30 und 36, die jeweils ein Teil des ersten bzw. zweites Antriebselements 32, 38 darstellen. Die erste und die zweite Riemenscheibe 30, 36 werden durch den ersten bzw. zweiten Antriebsriemen 26, 28 angetrieben bzw. in Rotation gebracht.

Die Getriebeeinrichtung 34 umfasst eine Abtriebswelle 40, die um eine Rotationsachse 42 rotiert. Die Abtriebswelle 40 ist mit einer Außenverzahnung 44 ausgebildet. Auf der Abtriebswelle 40 ist eine als Hohlwelle ausgebildete Schaltmuffe 46 oder Schalthülse axial verschiebbar und rotationssymmetrisch zur Rotationsachse 42 gelagert, wobei die Schaltmuffe 46 eine Innenverzahnung 48 und eine Außenverzahnung 50 aufweist. Die Innenverzahnung 48 der Schaltmuffe 46 steht mit der Außenverzahnung 44 der Abtriebswelle 40 in Antriebsverbindung.

Das erste Antriebselement 32 umfasst neben der Riemenscheibe 30 ferner eine Antriebsnabe 52, die mit der Riemenscheibe 30 drehfest verschraubt ist. Die Antriebsnabe 52 des ersten Antriebselements 32 ist mit einer Innenverzahnung 54 versehen, die mit der Außenverzahnung 50 der Schaltmuffe 46 durch axiales Verschieben derselben in Eingriff bringbar ist. Mit anderen Worten, am ersten Antriebselement 32 ist eine Innenverzahnung 54 ausgebildet, die mit der Außenverzahnung 50 der Schaltmuffe 46 in Eingriff bringbar ist. Das zweite Antriebselement 38 ist mit einer in der Riemenscheibe 36 ausgebildeten Antriebsnabe 56 ausgestattet, wobei Riemenscheibe 36 und Antriebsnabe 56 monolithisch bzw. einstückig ausgebildet sind. Die Antriebsnabe 56 des zweiten Antriebselements 38 ist ebenfalls mit einer Innenverzahnung 58 versehen, die ebenfalls mit der Außenverzahnung 50 der Schaltmuffe 46 durch axiales Verschieben derselben in Eingriff bringbar ist. Mit anderen Worten, am zweiten Antriebselement 38 ist ebenfalls eine Innenverzahnung 58 ausgebildet, die mit der Außenverzahnung 50 der Schaltmuffe 46 in Eingriff bringbar ist. Die Innenverzahnung 54 des ersten Antriebselements 32, die Außenverzahnung 50 der Schaltmuffe 46 und die Innenverzahnung 58 des zweiten Antriebselements 38 sind in axialer Richtung zur Rotationsachse 42 zueinander derart bemessen und beabstandet, dass die Außenverzahnung 50 der Schaltmuffe 46 vollständig aus der Innenverzahnung 54 des ersten Antriebselements 32 oder aus der zweiten Innenverzahnung 58 des zweiten Antriebselements 38 ausgerückt und zwischen den beiden Innenverzahnungen 54, 58 platziert werden kann, ohne mit einer der beiden Innenverzahnungen 54, 58 in Antriebsverbindung zu stehen. Mit anderen Worten, die Schaltmuffe 46 ist kann in drei Schaltstellungen verbracht werden, in eine erste (antriebsverbundene) Schaltstellung, in der die Außenverzahnung 50 der Schaltmuffe 46 in die Innenverzahnung 54 des ersten Antriebselements 32 eingerückt wird, in eine zweite (antriebsverbundene) Schaltstellung, in der die Außenverzahnung 50 der Schaltmuffe 46 in die Innenverzahnung 58 des zweiten Antriebselements 38 eingerückt wird und in eine dritte Schaltstellung, in der die Außenverzahnung 50 der Schaltmuffe 46, axial zwischen den beiden Innenverzahnungen 54, 58 des ersten bzw. zweiten Antriebselements 32, 38 positioniert wird. Die dritte Schaltstellung stellt eine Leerlaufstellung ohne Antriebsverbindung dar, wobei die Außenverzahnung 50 der Schaltmuffe 46 aus einer der beiden Innenverzahnungen 54, 58 ausgerückt und eine Antriebsverbindung mit einer der beiden Innenverzahnungen 54, 58 entsprechend getrennt wurde.

Die Riemenscheibe 30 des ersten Antriebselements 32 ist über einen Kugellagersatz 60 rotierbar und axial fixiert auf der Antriebsnabe 56 der Riemenscheibe 36 des zweiten Antriebselements 38 gelagert. Die Antriebsnabe 56 der Riemenscheibe 36 des zweiten Antriebselements 38 ist zudem über einen weiteren Kugellagersatz 62 rotierbar und axial fixiert auf der Abtriebswelle 40 gelagert. Die Innenverzahnungen 54, 58 des ersten bzw. zweiten Antriebselements 32, 38 und die Außenverzahnung 50 der Schaltmuffe 46 sind komplementär zueinander ausgebildet, so dass eine drehfeste Verbindung und eine axiale Verschiebbarkeit gewährleistet ist. Gleiches gilt für die Innenverzahnung 48 der Schaltmuffe 46 und die Außenverzahnung 44 der Abtriebswelle 40. Insgesamt umfasst die Getriebeeinrichtung 34 damit drei Verzahnungspaarungen, eine erste Verzahnungspaarung, aus Außenverzahnung 50 der Schaltmuffe 46 und Innenverzahnung 54 des ersten Antriebselements 32, eine zweite Verzahnungspaarung, aus Außenverzahnung 50 der Schaltmuffe 46 und Innenverzahnung 58 des zweiten Antriebselements 38 und eine dritte Verzahnungspaarung, aus Innenverzahnung 48 der Schaltmuffe 46 und Außenverzahnung 44 der Abtriebswelle 40.

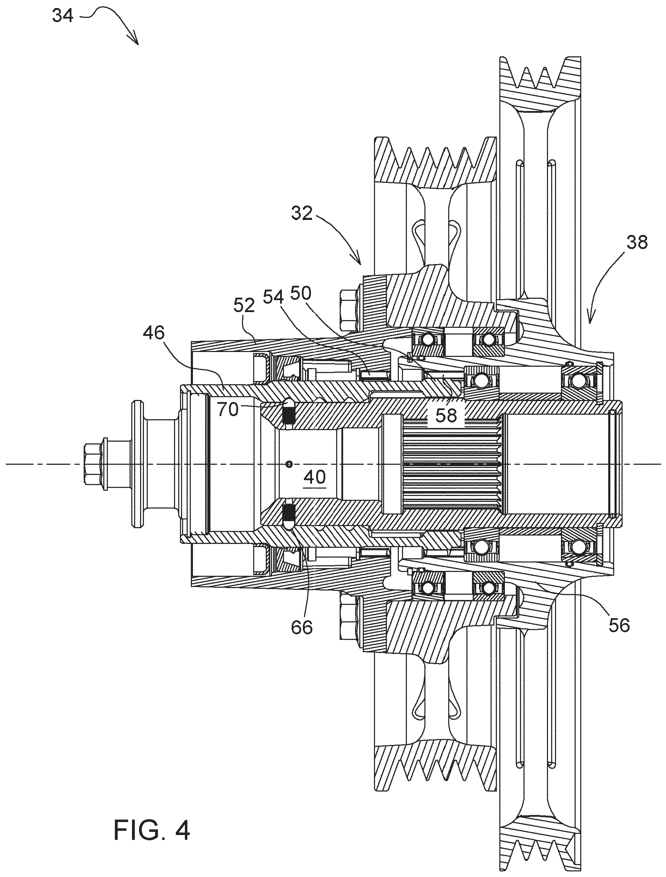

Wie oben bereits erwähnt, ist die Schaltmuffe 46 durch axiales Verschieben auf der Abtriebswelle 40 in drei Schaltstellungen positionierbar. Um eine axiale Fixierung und axiale korrekte Positionierung der Schaltmuffe 46 auf der Abtriebswelle 40 zu gewährleisten, ist an der radialen Innenseite der Schaltmuffe 46 eine erste (axial innenliegend), zweite (axial außenliegend) und dritte (axial mittig) Ringnut 64, 66, 68 ausgebildet, die jeweils mit einem ersten und einem zweiten Rastbolzen 70, 72 in Eingriff bringbar sind. Die Rastbolzen 70, 72 sind in außenseitig der Abtriebswelle 40 eingebrachten Radialbohrungen 74, 76 an umfangsbezogen gegenüberliegenden Positionen geführt. Die Rastbolzen 70, 72 sind jeweils durch eine Feder 78, 80 vorgespannt. Durch axiales Verschieben der Schaltmuffe 46 gegenüber der Abtriebswelle 40 können die Ringnuten 64, 66, 68 mit den Rastbolzen in Eingriff gebracht und die Schaltmuffe 46 fixiert werden. Für die erste Schaltstellung, in der die Außenverzahnung 50 der Schaltmuffe 46 in die Innenverzahnung 54 des ersten Antriebselements 32 eingerückt ist, wird die Schaltmuffe 46 mittels Eingriffsstellung der ersten Ringnut 64 mit den Rastbolzen 70, 72 fixiert (siehe Figur 3). Für die zweite Schaltstellung, in der die Außenverzahnung 50 der Schaltmuffe 46 in die Innenverzahnung 58 des zweiten Antriebselements 38 eingerückt ist, wird die Schaltmuffe 46 mittels Eingriffsstellung der zweiten Ringnut 66 mit den Rastbolzen 70, 72 fixiert (siehe Figur 4). Für die dritte Schaltstellung (Leerlaufstellung), in der die Außenverzahnung 50 der Schaltmuffe 46, axial zwischen den beiden Innenverzahnungen 54, 58 des ersten bzw. zweiten Antriebselements 32, 38 positioniert ist, wird die Schaltmuffe 46 mittels Eingriffsstellung der dritten Ringnut 68 mit den Rastbolzen 70, 72 fixiert (siehe Figur 2).

Zwecks Betätigung und Hantierung zum axialen Verschieben und rotatorischen Ausrichten der Schaltmuffe 46 (Verdrehen der Schaltmuffe 46) ist ein Betätigungsknauf 82 vorgesehen, der am äußeren Ende (axial außen) der Schaltmuffe 46 axial fixiert und drehfest mit der Schaltmuffe 46 verbunden ist. Das äußere Ende der Schaltmuffe 46 (axial außen) beschreibt hierbei das frei liegende, nicht auf der Abtriebswelle 40 geführte Ende der Schaltmuffe 46. Ein inneres Ende der Schaltmuffe 46 (axial innen) beschreibt entsprechend das auf der Abtriebswelle 40 geführte Ende der Schaltmuffe 46.

Die Abtriebswelle 40 ist als Hohlwelle mit einer weiteren Innenverzahnung 84 ausgebildet und kann wiederum in Eingriff mit einer Außenverzahnung einer Antriebswelle (nicht gezeigt) stehen, um die Bearbeitungseinrichtung 14, oder auch eine andere Gerätschaft oder Einrichtung (nicht gezeigt) zur Erntegutbearbeitung anzutreiben. Denkbar sind hier beispielsweise Häcksel-, Schneid-, Gebläse- oder auch Fördereinrichtungen, welche mit verschiedenen Drehzahlen anzutreiben sind. Letzteres wird dadurch erzielt, dass die Riemenscheiben 30, 36 mit unterschiedlichen Durchmessern ausgebildet sind, wodurch unterschiedliche Übersetzungen erzielt werden.

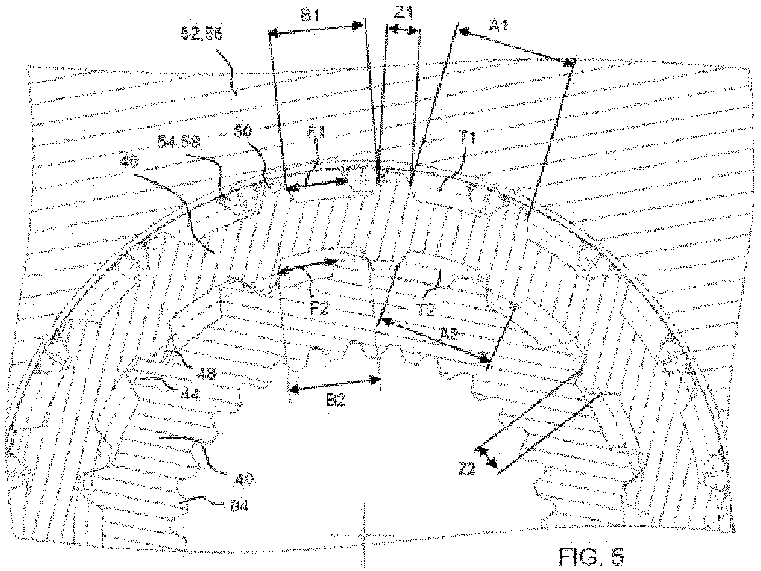

Wie eingangs bereits beschrieben wurde, muss bei einem Wechsel von einer Schaltstellung in eine andere Schaltstellung, durch axiales Verschieben der Schaltmuffe 46 die Außenverzahnung 50 der Schaltmuffe 46 in die jeweiligen Innenverzahnungen 54, 58 des ersten bzw. zweiten Antriebselements 32, 38 eingerückt werden. Dies ist nur möglich, wenn die Zähne der jeweiligen Verzahnungen stirnseitig nicht aufeinanderstoßen. Um dies zu gewährleisten, muss die Schaltmuffe 46 vor dem Einrücken gegebenenfalls verdreht bzw. ausgerichtet werden, so dass die Zähne der Außenverzahnung 50 in die Zahnlücken der jeweiligen Innenverzahnung geführt werden. Um das Verdrehen und Ausrichten möglichst einfach zu gestalten, wurden die Zwischenräume zwischen den Zähnen bzw. die Zahnlücken von der Innenverzahnung 54 und 58 der Antriebselemente 32, 34, von der Außenverzahnung 50 der Schaltmuffe 46, von der Innenverzahnung 48 der Schaltmuffe 46 und von der Außenverzahnung 44 der Abtriebswelle 40 derart gewählt, dass sich für die Schaltmuffe 46 ein limitierter Freilauf (F1, F2) (in Rotationsrichtung) gegenüber den Antriebselementen 32, 34 bzw. Antriebsnaben 52, 56 und der Abtriebswelle 40 ergibt (wie in Figur 5 schematisch dargestellt ist). Die Schaltmuffe 46 kann so um wenigstens zwei Mal eine Zahnbreite (Z1, Z2) (bezogen auf den jeweiligen Teilkreis (T1, T2) der Verzahnungen) nahezu widerstandsfrei, also ohne wesentliche der Verdrehrichtung entgegenstehende Drehmomente, ausgerichtet werden, so dass für jede Rotationsstellung der Schaltmuffe 46 genügend Freilauf (F1, F2) gewährleistet wird, um ein Aneinanderstoßen der Stirnflächen der Zähne beim Einrücken zu überwinden. Mit anderen Worten, jeder mögliche Überdeckungszustand bei einem Schaltvorgang von einer Schaltstellung in eine andere Schaltstellung (also jede mögliche Fehlstellung beim Einrücken) kann durch den Freilauf (F1, F2) überwunden werden. Es wird somit ein limitierter Freilauf (F1, F2) für die Schaltmuffe 46 geschaffen, der je nach Rotationsstellung der Schaltmuffe 46 in beide Umfangsrichtungen bereitgestellt wird. Das heißt, die Schaltmuffe 46 ist in jeder Rotationsstellung bzw. Schaltstellung für ein gewisses Rotationsmaß ohne jeglichen Eingriff der Zähne, weder seitens der Antriebselemente 32, 34 noch seitens der Abtriebswelle 40, in wenigstens eine Drehrichtung frei verdrehbar. Der limitierte Freilauf (F1, F2) deckt in etwa eine Kreisbogenlänge des jeweiligen Teilkreises (T1, T2) von zwei Mal eine Zahnbreite (Z1, Z2) am jeweiligen Teilkreis (T1, T2) ab.

Gemäß Figur 5 ist der Zahnabstand (A1, A2) für die jeweiligen Verzahnungspaarungen so bemessen, dass die erste, zweite und dritte Verzahnungspaarung mit einer gegenüber normierten Zahnradmoduln (m) zugeordneten Zahnteilung (pₘ) um in etwa den Faktor 2 größeren Zahnteilung (p) ausgebildet ist, so dass für die Innenverzahnungen 54, 58 der Antriebsnaben 52, 56, für die Außenverzahnung 50 und die Innenverzahnung 48 der Schaltmuffe 66, als auch für die Außenverzahnung 44 der Abtriebswelle 40 sich ein um in etwa den Faktor 2 größerer Zahnabstand (A1, A2) ergibt. Dabei wird der Zahnabstand (A1, A2) als Entfernung zwischen zwei gleichen Punkten zweier benachbarter Zähne auf dem jeweiligen Teilkreis (T1, T2) verstanden. Der Zahnabstand (A1, A2) beeinflusst damit direkt eine Zahnlückenbreite (B1, B2) oder Zahnzwischenraumlänge in Höhe des jeweiligen Teilkreises (T1, T2) der Verzahnungspaarung. Mit einer derartigen Ausbildung der Verzahnungen wird der Zahnabstand (A1, A2) in den jeweiligen Verzahnungspaarungen gegenüber einer normierten Verzahnung verdoppelt, wobei die Zahngeometrie, also Form und Größe der Zähne entsprechend der den normierten Zahnmoduln (m) zugeordneten Zahngeometrie beibehalten wird. Das Verhältnis von Zahnlückenbreite (B1, B2) oder Zahnzwischenraumlänge zu Zahnbreite (Z1, Z2) in Höhe des jeweiligen Teilkreises (T1, T2) wird dadurch in etwa verdreifacht (von in etwa 1 (bei einfacher Zahnlücke) auf in etwa 3 (bei einer dreifachen Zahnlücke)). Mit anderen Worten, die erfindungsgemäßen Verzahnungspaarungen zwischen Schaltmuffe 46 und Antriebselemente 32, 34 bzw. zwischen Schaltmuffe 46 und Abtriebswelle 40 werden gegenüber einer normierten Verzahnungspaarung mit nur jedem zweiten Zahn ausgebildet. Oder andersherum, die in Figur 5 dargestellten Verzahnungspaarungen werden dadurch erhalten bzw. sind derart ausgebildet, dass aus der normierten Verzahnungspaarung mit normierten Zahnmoduln (m) jeweils nur jeder zweite Zahn vorgesehen ist. Damit wird ein zur Verfügung stehender Spielraum (Zahnlückenbreiten (B1, B2) bzw. Zahnzwischenraumlängen) zum Einrücken der Zähne in etwa verdreifacht. Die in etwa um den Faktor 2 größere Zahnteilung (p) (im Vergleich zu einer gemäß normierten Zahnmoduln (m) zugeordneten Zahnteilung (pₘ)) wird sowohl bei den beiden Verzahnungspaarungen außenseitig der Schaltmuffe 46 (Innenverzanhnung 54, 58 der Antriebsnaben 52, 56 mit der Außenverzahnung 50 der Schaltmuffe 46) als auch auf die dritte Verzahnungspaarung innenseitig der Schaltmuffe 46 (Innenverzahnung 48 der Schaltmuffe 46 mit der Außenverzahnung 44 der Abtriebswelle 40) angewendet, so dass auch dort der Zahnabstand (A1, A2) (bezogen auf den jeweiligen Teilkreis (T1, T2) bzw. in Höhe des Teilkreises (T1, T2)) von in etwa nach Norm einer Zahnbreite (Z1, Z2) auf in etwa drei Mal eine Zahnbreite (Z1, Z2) gemäß Figur 5 vergrößert wird.

## Patentansprüche

1. Getriebeeinrichtung (34) mit einem ersten Antriebselement (32), einem zweiten Antriebselement (38), einer als Hohlwelle ausgebildeten Schaltmuffe (46) und einer Abtriebswelle (40), wobei
die Schaltmuffe (46) auf der Abtriebswelle (40) axial verschiebbar gelagert ist und durch axiales Verschieben in eine erste, zweite oder dritte Schaltstellung verbringbar ist,
am ersten und am zweiten Antriebselement (32, 38) jeweils eine Innenverzahnung (54, 58),
an der Schaltmuffe (46) eine Außenverzahnung (50) und eine Innenverzahnung (48) und
an der Abtriebswelle (40) eine Außenverzahnung (44) ausgebildet ist, wobei
in der ersten Schaltstellung die Außenverzahnung (50) der Schaltmuffe (46) eine erste Verzahnungspaarung mit der Innenverzahnung (54) des ersten Antriebselements (32) bildet,
in der zweiten Schaltstellung die Außenverzahnung (50) der Schaltmuffe (46) eine zweite Verzahnungspaarung mit der Innenverzahnung (58) des zweiten Antriebselements (38) bildet und
die Innenverzahnung (48) der Schaltmuffe (46) mit der Außenverzahnung (44) der Abtriebswelle (40) eine dritte Verzahnungspaarung bildet,
**dadurch gekennzeichnet, dass**
die erste, zweite und dritte Verzahnungspaarung mit einer gegenüber normierten Zahnradmoduln (m) zugeordneten Zahnteilung (pm) um in etwa den Faktor 2 größeren Zahnteilung (p) ausgebildet ist, so dass ein um in etwa den Faktor 2 größerer Zahnabstand (A1, A2) erzielt wird.

2. Getriebeeinrichtung (34) nach Anspruch 1, wobei an der Schaltmuffe (46) innenseitig mehrere Ringnuten (64, 66, 68) ausgebildet sind und jeder Schaltstellung eine Ringnut (64, 66, 68) zugeordnet ist, die jeweils durch axiales Verschieben der Schaltmuffe (46) auf der Abtriebswelle (40) mit wenigstens einem in der Abtriebswelle (40) federvorgespannt gelagerten Rastbolzen (70, 72) in Eingriff bringbar ist.

3. Getriebeeinrichtung (34) nach Anspruch 1 oder 2, wobei an einem axialen Ende der Schaltmuffe (46) ein Betätigungsknauf (82) zum axialen Verstellen und rotatorischen Ausrichten der Schaltmuffe (46) ausgebildet ist.

4. Getriebeeinrichtung (34) nach einem der Ansprüche 1 bis 3, wobei die Abtriebswelle (40) als Hohlwelle ausgebildet ist und eine Innenverzahnung (84) aufweist.

5. Getriebeeinrichtung (34) nach einem der Ansprüche 1 bis 4, wobei die Getriebeeinrichtung (34) als Riemenantriebsgetriebe ausgebildet ist und das erste und das zweite Antriebselement (32, 38) eine Riemenscheibe (30, 36) umfasst.

6. Landwirtschaftliche Erntemaschine (10) mit einem Riemenantrieb (20) und einer dem Riemenantrieb (20) zugeordneten Getriebeeinrichtung (34) nach einem oder mehreren der Ansprüche 1 bis 5.

## Claims

1. Transmission device (34) having a first drive input element (32), a second drive input element (38), a shift sleeve (46) configured as a hollow shaft, and a drive output shaft (40), wherein
the shift sleeve (46) is mounted axially displaceably on the drive output shaft (40) and can be moved by axial displacement into a first, a second or a third shift position,
an internal toothing (54, 58) is formed on each of the first and the second drive input element (32, 38),
an external toothing (50) and an internal toothing (48) are formed on the shift sleeve (46), and
an external toothing (44) is formed on the drive output shaft (40), wherein,
in the first shift position, the external toothing (50) of the shift sleeve (46) forms a first toothing pairing with the internal toothing (54) of the first drive input element (32),
in the second shift position, the external toothing (50) of the shift sleeve (46) forms a second toothing pairing with the internal toothing (58) of the second drive input element (38), and
the internal toothing (48) of the shift sleeve (46) forms a third toothing pairing with the external toothing (44) of the drive output shaft (40),
**characterized in that**
the first, second and third toothing pairing are configured with a tooth pitch (p) which is greater by approximately a factor of 2 than a tooth pitch (pm) associated with standardized toothed gear moduli (m), such that a tooth spacing (A1, A2) that is greater by approximately a factor of 2 is achieved.

2. Transmission device (34) according to Claim 1, wherein multiple annular grooves (64, 66, 68) are formed on the inside of the shift sleeve (46), and one annular groove (64, 66, 68) is assigned to each shift position, which annular grooves can in each case be placed in engagement, by axial displacement of the shift sleeve (46) on the drive output shaft (40), with at least one detent bolt (70, 72) that is mounted in spring-preloaded fashion in the drive output shaft (40).

3. Transmission device (34) according to Claim 1 or 2, wherein, on one axial end of the shift sleeve (46), there is formed an actuating boss (82) for the axial adjustment and rotational alignment of the shift sleeve (46).

4. Transmission device (34) according to any one of Claims 1 to 3, wherein the drive output shaft (40) is configured as a hollow shaft and has an internal toothing (84).

5. Transmission device (34) according to any one of Claims 1 to 4, wherein the transmission device (34) is configured as a belt drive transmission, and the first and the second drive input element (32, 38) comprise a pulley (30, 36).

6. Agricultural harvesting machine (10) having a belt drive (20) and having a transmission device (34) according to one or more of Claims 1 to 5 assigned to the belt drive (20) .

## Revendications

1. Dispositif de transmission (34) avec un premier élément d'entraînement (32), un deuxième élément d'entraînement (38), un manchon de changement de vitesse (46) formé comme un arbre creux et un arbre de sortie (40),
le manchon de changement de vitesse (46) étant monté de manière à pouvoir coulisser axialement sur l'arbre de sortie (40) et pouvant être amené dans une première, deuxième ou troisième position de changement de vitesse par un coulissement axial,
une denture intérieure (54, 58) étant formée sur le premier et le deuxième élément d'entraînement (32, 38), une denture extérieure (50) et une denture intérieure (48) étant formées sur le manchon de changement de vitesse (46),
une denture extérieure (44) étant formée sur l'arbre de sortie (40),
la denture extérieure (50) du manchon de changement de vitesse (46) formant dans la première position de changement de vitesse une première paire de dentures avec la denture intérieure (54) du premier élément d'entraînement (32),
la denture extérieure (50) du manchon de changement de vitesse (46) formant dans la deuxième position de changement de vitesse une deuxième paire de dentures avec la denture intérieure (58) du deuxième élément d'entraînement (38) et
la denture intérieure (48) du manchon de changement de vitesse (46) formant avec la denture extérieure (44) de l'arbre de sortie (40) une troisième paire de dentures, **caractérisé en ce que**
la première, deuxième et troisième paire de dentures sont formées avec un pas de dent (p) supérieur environ du facteur 2 par rapport à un pas de dent (pm) associé à des modules de roue dentée normalisés (m), de telle sorte qu'un espacement de dent (A1, A2) supérieur environ du facteur 2 est obtenu.

2. Dispositif de transmission (34) selon la revendication 1, plusieurs rainures annulaires (64, 66, 68) étant formées côté intérieur sur le manchon de changement de vitesse (46) et une rainure annulaire (64, 66, 68) étant associée à chaque position de changement de vitesse, laquelle peut être amenée en prise avec au moins un boulon d'enclenchement (70, 72) monté de manière précontrainte par ressort dans l'arbre de sortie (40) respectivement par coulissement axial du manchon de changement de vitesse (46) sur l'arbre de sortie (40).

3. Dispositif de transmission (34) selon la revendication 1 ou 2, un bouton d'actionnement (82) étant formé sur une extrémité axiale du manchon de changement de vitesse (46) pour ajuster axialement et orienter par rotation le manchon de changement de vitesse (46).

4. Dispositif de transmission (34) selon l'une des revendications 1 à 3, l'arbre de sortie (40) étant formé comme un arbre creux et comportant une denture intérieure (84).

5. Dispositif de transmission (34) selon l'une des revendications 1 à 4, le dispositif de transmission (34) étant formé comme une transmission d'entraînement par courroie et le premier et le deuxième élément d'entraînement (32, 38) comprenant une poulie (30, 36).

6. Machine de récolte agricole (10) avec un entraînement par courroie (20) et un dispositif de transmission (34) associé à l'entraînement par courroie (20) selon une ou plusieurs des revendications 1 à 5.
